# DEMANDE DE BREVET EUROPEEN

(11) **EP 4 851 817 A1**
(43) Date de publication de la demande: **09.12.2026**
(21) Numéro de dépôt: 25180211.2
(22) Date de dépôt: 02.06.2025
(51) Int. Cl.: G06F 15/173, H04L 47/36

(54) **PROCÉDÉ DE TRANSFERT DE DONNÉES**

(71) Demandeur: BULL SAS, 78340 Les Clayes-Sous-Bois (FR); Commissariat à l'Energie Atomique et aux Energies Alternatives, 75015 Paris (FR)
(72) Inventeur: BRELLE, Emmanuel, 38000 GRENOBLE (FR)
(74) Mandataire: Cabinet Camus Lebkiri

(57) **Abrégé**

Procédé (200) de transfert de données, mis en œuvre par un réseau d'interconnexion, les données à transférer ayant une taille supérieure à une taille maximale prédéterminée, le procédé (200) comprenant :
- génération (240), par la première carte réseau d'envoi de l'entité émettrice, d'un premier message à envoyer, le premier message comprenant un premier paquet de données à transférer ayant une taille égale à la taille maximale prédéterminée et des informations de description comprenant une taille des données à transférer,
- réception et traitement (260) du premier message par la première carte réseau de réception de l'entité réceptrice,
- envoi (270) par une des cartes réseau de l'entité réceptrice à une des cartes réseau de l'entité émettrice, d'une requête informant que l'entité réceptrice est prête à recevoir le reste des données à transférer,
- envoi (290), par l'ensemble des cartes réseau de l'entité émettrice, du reste des données à transférer.

## Description

### DOMAINE TECHNIQUE DE L'INVENTION

Le domaine technique de l'invention est celui des réseaux d'interconnexion et en particulier des réseaux d'interconnexion pour les supercalculateurs et les charges de travail intensives en intelligence artificielle et en calcul haute performance.

La présente invention concerne un procédé de transfert de données mis en œuvre par un réseau d'interconnexion.

### ARRIERE-PLAN TECHNOLOGIQUE DE L'INVENTION

Un réseau d'interconnexion sert à relier plusieurs entités informatiques, afin de permettre l'échange de données et la communication entre tous les utilisateurs ou équipements connectés. Dans un supercalculateur, le réseau d'interconnexion joue un rôle absolument central. En effet, il permet de relier les dizaines, centaines de milliers, voire des millions de cœurs de processeurs, organisés en nœuds de calcul, afin qu'ils puissent échanger très rapidement des données et synchroniser leurs calculs pour résoudre des problèmes complexes de façon parallèle.

De manière classique dans un réseau d'interconnexion, le transfert de données d'une entité émettrice vers une entité réceptrice est géré par les processeurs, notés CPU pour « central processing unit » en anglais, des entités émettrice et réceptrice en suivant un protocole appelé « software matching » en anglais. Dans le protocole de « software matching », les CPUs, gèrent notamment les problèmes liés à la congestion de réseau. Ainsi, le processus émetteur, exécuté par le CPU de l'entité émettrice, envoie un premier message comprenant une description et les données à transférer. La description comprend notamment la taille totale des données à transférer. La taille mémoire du CPU de l'entité réceptrice est un facteur limitant la taille totale des données à transférer durant ce premier envoi. La taille du premier message est limitée car le premier message est reçu sur de la mémoire supplémentaire de l'entité réceptrice, cachée du point de vue de l'application. Cette mémoire est donc en concurrence avec celle utilisée pour les calculs de l'application. Ainsi, dans le protocole de « software matching », la taille maximale autorisée du premier message est limitée en fonction notamment de la taille mémoire du CPU de l'entité réceptrice, du nombre de processus exécutés par le CPU de l'entité réceptrice ainsi que par le débit maximal de la carte réseau de l'entité réceptrice. Ainsi, en pratique, la taille maximale autorisée du premier message envoyé, i.e. en un seul envoi, selon le protocole de « software matching » est de l'ordre de quelques kilooctets au maximum. Lorsque la taille des données à transférer est supérieure à la taille maximale autorisée du message, le processus récepteur, exécuté par le CPU de l'entité réceptrice, initie la récupération des données restantes en envoyant par exemple une ou des requêtes à l'entité émettrice. La requête peut notamment comprendre des informations indiquant que le processeur récepteur est prêt à recevoir de nouvelles données et l'adresse mémoire à laquelle ces nouvelles données peuvent être envoyées. Le processus émetteur envoie, après traitement de la requête, les données restantes, sous forme de messages restants, directement dans la zone mémoire souhaitée. Chaque message restant comprend un fragment des données restantes qui peut être supérieur à la taille maximale autorisée. La taille de ces messages peut varier en fonction de la gestion d'une éventuelle congestion réseau, de la division des données sur différents canaux, de l'accessibilité, directe ou non, de la mémoire ciblée. Chaque message restant comprend donc un fragment des données restantes à transférer. Ce protocole de « software matching » permet au processus émetteur de réguler le flux de messages en vol dans le réseau. L'envoi des données peut être fragmenté, possiblement sur plusieurs cartes réseau de l'entité réceptrice, pour éviter de la congestion réseau. Toutefois, chaque premier message a une taille très fortement limitée. De plus, le CPU de l'entité émettrice est sollicité à chaque envoi de fragments de données et le CPU de l'entité réceptrice est sollicité à la réception de chaque message comprenant ces fragments de données. Au final, ce grand nombre d'interruptions des CPUs entraîne une latence importante dans le transfert des données. Ainsi, pour des applications telle que l'interconnexion de nœuds de supercalculateurs, le protocole de « software matching » est peu adapté.

Il existe donc un besoin de fournir un procédé de transfert de données limitant, au moins partiellement, les problèmes liés à l'utilisation des procédés de l'art antérieur.

### RESUME DE L'INVENTION

L'invention offre une solution aux problèmes évoqués précédemment, en permettant l'envoi de messages, y compris d'un premier message, d'une taille arbitraire, possiblement égale ou supérieure à un mégaoctet. L'envoi d'un message d'une telle taille est possible puisque, dans le procédé selon l'invention, le CPU de l'entité émettrice et le CPU de l'entité réceptrice délèguent la majorité de la mise en œuvre du procédé de transfert de données aux cartes réseaux. Ainsi, les cartes réseaux réalisent le protocole de données en minimant les sollicitations des CPUs. En effet, par exemple, dans le cadre de l'invention, les problèmes liés à la congestion réseau sont gérées par la ou les cartes réseau et non plus par CPU. Ainsi, les CPUs, conservent plus de disponibilités pour d'autres tâches, par exemple pour des tâches liées à l'exécution de l'application dans le cadre de laquelle les données sont à transférer. De plus, la taille des messages, et en particulier celle du premier message, est beaucoup plus importante que pour le protocole de « software matching ». En effet, pour le protocole de « software matching », la mémoire impliquée dans le transfert des données est celle déjà utilisée par l'application pour les calculs, ce qui limite la taille possible des messages. Dans l'invention, la taille des messages comprenant le reste des données à transférer n'est pas limité. Ainsi, la fragmentation des données restantes à envoyer en plusieurs messages ne vise qu'à répartir la réception des données à transférer sur les différentes cartes réseaux de l'entité réceptrice.

Un aspect de l'invention concerne un procédé de transfert de données, mis en œuvre par un réseau d'interconnexion comprenant :
- une entité émettrice comprenant un CPU et un ensemble de cartes réseau, et
- une entité réceptrice comprenant un CPU et un ensemble de cartes réseaux,
les données à transférer ayant une taille supérieure à une taille maximale prédéterminée, la taille maximale prédéterminée correspondant à une taille maximale de données pouvant être transférées par l'entité émettrice à l'entité réceptrice en un seul envoi, la taille maximale prédéterminée étant connue par l'entité émettrice et l'entité réceptrice, le procédé de transfert comprenant :
- soumission, par un processus exécuté par le CPU de l'entité émettrice à une première carte réseau d'envoi de l'entité émettrice, des données à transférer à un processus exécuté par le CPU de l'entité réceptrice,
- génération, par la première carte réseau d'envoi de l'entité émettrice, d'un premier message à envoyer, le premier message comprenant un premier paquet de données à transférer ayant une taille égale à la taille maximale prédéterminée et des informations de description comprenant une taille des données à transférer,
- envoi, par la première carte réseau d'envoi de l'entité émettrice à une première carte réseau de réception de l'entité réceptrice, du premier message,
- réception et traitement du premier message par la première carte réseau de réception de l'entité réceptrice,
- envoi, par une des cartes réseau de l'entité réceptrice à une des cartes réseau de l'entité émettrice, d'une requête informant que l'entité réceptrice est prête à recevoir le reste des données à transférer,
- réception et traitement, par l'une des cartes réseau de l'entité émettrice, de la requête,
- envoi, par l'ensemble des cartes réseau de l'entité émettrice, du reste des données à transférer, l'envoi étant effectué en différents messages, comprenant différents paquets restants de données, envoyés à l'ensemble des cartes réseaux de l'entité réceptrice,
- réception et traitement des différents messages par l'ensemble des cartes réseaux de l'entité réceptrice, et
- notification, par au moins une des cartes réseaux de l'entité réceptrice au CPU de l'entité émettrice et au CPU de l'entité émettrice, de la réception des données à transférer.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- la taille maximale prédéterminée est comprise entre 0,5 et 2 mégaoctets ;
- les données à transférer sont des données de calcul et les entités réceptrice et émettrice sont comprises dans deux nœuds distincts d'un supercalculateur ;
- le procédé comprend en outre, avant la soumission (230) des données à transférer :
   - Envoi, par l'entité réceptrice à la carte réseau de l'entité émettrice, d'un appel indiquant, à la carte réseau de l'entité émettrice que l'entité réceptrice est en attente de recevoir les données à transférer ;
- le procédé comprend en outre, une étape initiale de :
   - initialisation du réseau d'interconnexion durant laquelle l'entité émettrice obtient une information indiquant des cartes réseaux de l'entité réceptrice disponibles pour du transfert du message parmi l'ensemble des cartes réseaux de l'entité réceptrice ;
- la description du message comprend en outre au moins une adresse mémoire de l'entité émettrice à laquelle l'entité réceptrice peut accéder aux données du message.

Un autre aspect de l'invention concerne un réseau d'interconnexion comprenant :
- une entité émettrice comprenant un CPU et un ensemble de cartes réseaux, et
- une entité réceptrice comprenant un CPU et un ensemble de cartes réseaux,
le réseau d'interconnexion étant configuré pour mettre en œuvre le procédé de transfert selon l'invention.

Outre les caractéristiques qui viennent d'être évoquées dans le paragraphe précédent, le réseau d'interconnexion selon un aspect de l'invention peut être un réseau d'interconnexion d'un supercalculateur.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 représente schématiquement un exemple de réseau d'interconnexion selon l'invention ;
- La figure 2 est un schéma synoptique illustrant les étapes d'un exemple du procédé de transfert de données selon l'invention.

Sauf précision contraire, un même élément apparaissant sur des figures différentes présente une référence unique.

### DESCRIPTION DETAILLEE

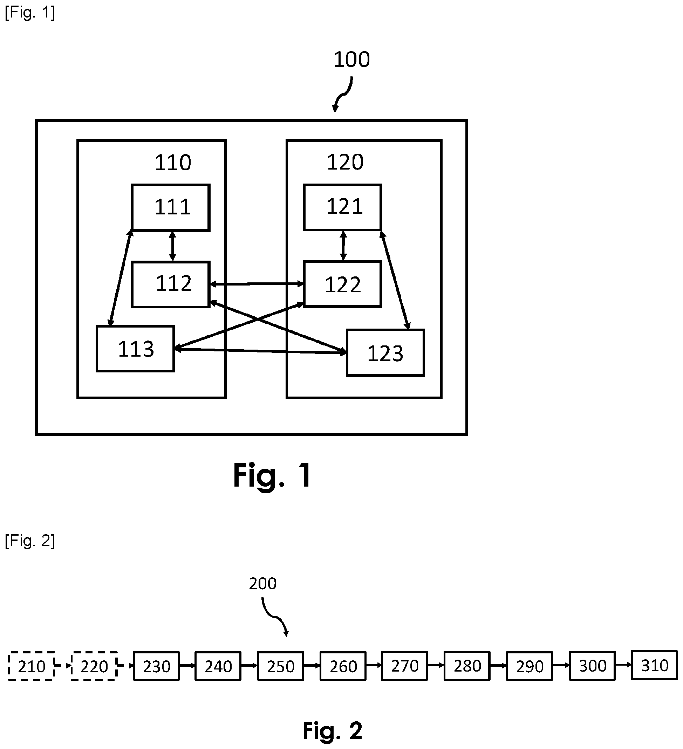

Le procédé de transfert de données selon l'invention est mis en œuvre par un réseau d'interconnexion. La figure 1 représente schématiquement un exemple de réseau d'interconnexion adapté pour mettre en œuvre le procédé de transfert de données selon l'invention.

. Le réseau d'interconnexion 100 comprend deux entités : une entité émettrice 110 et une entité réceptrice 120. Dans l'invention, l'entité émettrice 110 envoie des données à l'entité réceptrice 120. L'entité émettrice 110 comprend un CPU 111 et un ensemble de cartes réseau 112, 113. Sur la figure 1, deux cartes réseaux 112 et 113 sont représentées. Dans le cadre de l'invention, l'entité réceptrice peut par exemple comprendre entre 2 et 4 cartes réseaux, voire même 5 ou 10 cartes réseaux. Il est possible de noter qu'avec l'utilisation de plusieurs cartes réseaux de l'entité émettrice, la bande passante effective du transfert est multipliée puisque les performances de l'envoi du reste des données sont améliorées. L'entité réceptrice 120 comprend un CPU 121 et un ensemble de cartes réseaux. Sur la figure 1, deux cartes réseaux 122 et 123 sont représentées. Dans le cadre de l'invention, l'entité réceptrice peut par exemple comprendre entre 2 et 4 cartes réseaux, voire même 5 ou 10 cartes réseaux. Chaque entité 110 et 120 possède également une mémoire ayant enregistré dessus un programme informatique comprenant des instructions pour mettre en œuvre le procédé selon l'invention. La mémoire peut également stocker une base de données. La mémoire est tout matériel adapté pour un tel stockage, comprenant éventuellement plusieurs parties physiques distinctes. Par « mis en œuvre par un réseau d'interconnexion », il est entendu que les étapes, ou pratiquement toutes les étapes du procédé selon l'invention, sont exécutées par un réseau d'interconnexion. Ainsi, des étapes sont réalisées par le réseau d'interconnexion, éventuellement de manière entièrement automatique, ou semi-automatique. Dans des exemples, le déclenchement d'au moins une des étapes du procédé selon l'invention peut être effectué par interaction utilisateur-système. Le niveau d'interaction utilisateur-système requis peut dépendre du niveau d'automatisme prévu et mis en balance avec la nécessité de mettre en œuvre les souhaits de l'utilisateur. Dans des exemples, ce niveau peut être défini par l'utilisateur et/ou prédéfini. Le réseau d'interconnexion 100 peut être un réseau d'interconnexion, tel que BXI pour « BullSequana eXascale Interconnect » en anglais, reliant des nœuds d'un supercalculateur, tel que les supercalculateurs EXA1 et EXA1-HE. Lorsque le réseau d'interconnexion relie des nœuds d'un supercalculateur, les données à transférer peuvent être des données de calcul et les entités réceptrice 110 et émettrice 120 peuvent être comprises dans deux nœuds distincts du supercalculateur.

La figure 2 est un schéma synoptique illustrant les étapes d'un exemple du procédé de transfert de données selon l'invention.

Le procédé 100 permet le transfert de données d'une taille arbitraire. La taille des données à transférer est par exemple la limite physique de mémoire disponible pour un cœur de CPU, de l'ordre de plusieurs giga-octets voire de plusieurs tera-octets de DRAM, pour « Dynamic Random Access Memory » en anglais. La taille du premier message est configurable et est théoriquement illimitée. Toutefois, une taille du premier message comprise entre 0,5 et 2 mégaoctets est privilégiée. En effet, une taille plus petite ne permet pas d'optimiser la performance due à la réactivité du CPU 121 de l'entité réceptrice 120 à découvrir le premier message. Une taille plus importante impliquerait une perte, au moins partielle, du gain de performance apporté par le découpage du reste des données. Les messages comprenant le reste des données à transférer peuvent avoir une taille beaucoup plus importante. L'ensemble des données restantes pourraient être envoyées dans un unique message restant lorsque la taille des données restantes est inférieure à la limite physique de mémoire disponible pour un cœur de CPU. La fragmentation des données en plusieurs messages est utile afin de pouvoir répartir la charge liée à l'acheminement des données à transférer sur plusieurs cartes réseaux des entités réceptrice et émettrice. La taille maximale est prédéterminée et connue par l'entité émettrice 110 et l'entité réceptrice 120. Ainsi les entités 110 et 120 peuvent optimiser les opérations nécessaires au transfert des données telles que les opérations d'allocation mémoire. Ainsi, comparativement au procédé « software matching », chaque premier message comprend environ 1000 fois plus de données ; i.e. un envoi comprend une quantité de données de l'ordre du mégaoctet contre seulement plusieurs kilooctets pour le procédé « software matching », ce qui permet de réduire le nombre d'interactions entre l'entité émettrice et l'entité réceptrice lors du transfert de données.

Une étape 210 optionnelle du procédé 100 de transfert de données comprend une initialisation du réseau d'interconnexion. Cette initialisation du réseau d'interconnexion comprend notamment l'obtention, par l'entité émettrice 110 d'un statut concernant la disponibilité ou non de chaque carte réseau de l'entité réceptrice 120 pour mettre en œuvre le procédé 100 de transfert de données. L'initialisation du réseau d'interconnexion peut aussi comprendre l'obtention, par l'entité émettrice 110 d'un statut concernant la disponibilité ou non de chaque carte réseau de l'entité émettrice 110 pour mettre en œuvre le procédé 100 de transfert de données. De manière optionnelle, l'étape 210 peut comprendre l'obtention de l'identifiant réseau de l'entité réceptrice. Afin de simplifier la suite de la description, il est considéré que l'ensemble des cartes réseaux de l'entité émettrice 110 et l'ensemble des cartes réseaux de l'entité réceptrice 120 sont disponibles. Lorsque certaines cartes réseaux de l'entité émettrice 110 (resp. de l'entité réceptrice 120) ne sont pas disponibles, l'ensemble des cartes réseaux de l'entité émettrice 110 (resp. de l'entité réceptrice 120) impliqué dans la mise en œuvre du procédé 100 correspond à l'ensemble, ou une partie, des cartes réseaux disponibles de l'entité émettrice 110 (resp. de l'entité réceptrice 120).

Une étape 220 optionnelle du procédé 100 de transfert de données comprend l'envoi, par la première carte réseau de réception 122 de l'entité réceptrice 120 à la première carte réseau d'envoi 112 de l'entité émettrice 110, d'un appel indiquant, à la première carte réseau d'envoi 110 de l'entité émettrice 112 que l'entité réceptrice 120 est en attente de recevoir les données à transférer. L'appel est par exemple un appel comprenant la fonction « recv » lorsque le système d'exploitation est de type Linux par exemple. Cette étape optionnelle est mise en œuvre lorsque l'entité réceptrice est en attente de données. La première carte réseau d'envoi 112 peut être n'importe quelle carte réseau 112, 113 disponible de l'entité émettrice 110. La première carte réseau de réception 122 peut être n'importe quelle carte réseau 122, 123 disponible de l'entité réceptrice 120.

Une étape 230 du procédé 100 de transfert de données comprend la soumission 230, par un processus exécuté par le CPU 111 de l'entité émettrice 110 à la première carte réseau d'envoi 112 de l'entité émettrice 110, des données à transférer à un processus exécuté par le CPU 121 de l'entité réceptrice 120. Le processus est par exemple exécuté dans le cadre d'une application d'algèbre linéaire, de prévision météo, de physique moléculaire ou encore de dynamique des fluides. Par exemple, l'application peut être une application de calcul, telle qu'une simulation d'un comportement physique ou chimique, dans laquelle le calcul est morcelé sur plusieurs cœurs de CPU et les résultats de ces morceaux ont des conséquences sur les futurs calculs, y compris pour les autres cœurs. Une partie du résultat est communiquée via le réseau. Pendant ce temps d'autres morceaux de calcul de l'application peuvent avoir lieu. Ainsi, le logiciel réseau peut être considéré comme faisant partie de l'application dans le cadre de laquelle les données sont à transférer. Cette étape 230 permet donc au CPU 111 de l'entité émettrice 110 de déléguer le reste des tâches, liées au transfert de données nécessaires à l'avancement de l'exécution du processus, à la première carte réseau d'envoi 112 de l'entité émettrice 110.

Une étape 240 du procédé 100 de transfert de données comprend la génération, par la première carte réseau d'envoi 112 de l'entité émettrice 110 d'un premier message à transférer. Le premier message comprend un premier paquet de données à transférer ayant une taille égale à la taille maximale prédéterminée. Ce premier message ne comprend donc qu'une partie des données à transférer. Le reste des données est ainsi transféré par l'envoi d'autres messages dans les étapes ultérieures. Le premier message comprend aussi une description des données à transférer. Les informations de description peuvent être diverses et comprennent au moins la taille des données à transférer. D'autres informations de description peuvent être un identifiant de l'entité réceptrice 120, le type de protocole utilisé pour transférer les données. Enfin, les informations de description peuvent comprendre toute information utile pour permettre à l'entité réceptrice de réordonner les données reçues. Ces informations utiles peuvent être plus ou moins complexes en fonction de la taille souhaitée de la description. Par exemple, de manière minimaliste, ces informations utiles peuvent correspondre uniquement à la taille des données à transférer et à l'adresse mémoire de l'entité émettrice correspondant à l'adresse de la première donnée parmi les données à transférer. Des informations additionnelles de description peuvent être ajoutées telles que des informations permettant de minimiser les opérations nécessaires, mises en œuvre par l'entité réceptrice 120, pour réordonner les données reçues. Ces informations additionnelles peuvent par exemple être un index du fragment envoyé.

Une étape 250 du procédé 100 de transfert de données comprend l'envoi, par la première carte réseau d'envoi 112 de l'entité émettrice 110 à une première carte réseau de réception 122 de l'entité réceptrice 120, du premier message.

Une étape 260 du procédé 100 de transfert de données comprend la réception et le traitement du premier message par la première carte réseau de réception 122 de l'entité réceptrice 120. Le traitement du premier message comprend notamment, la mise en mémoire des données reçues. De plus, le traitement du premier message comprend aussi la lecture des informations de description. Comme précisé précédemment, les termes « première carte réseau de réception de l'entité réceptrice » désigne n'importe laquelle des cartes réseau 122, 123 disponibles de l'entité réceptrice 120. Toutefois, lorsqu'une carte réseau a été désignée comme la première carte réseau de réception pour réceptionner et traiter le premier message de données à transférer dans le cadre d'une application, la première carte réseau de réception est préférentiellement utilisée pour réceptionner le premier message d'autres données à transférer dans le cadre de la même application. Ainsi, les messages sont ordonnés et l'application peut identifier ce qu'elle a déjà reçu et organiser au mieux les espaces mémoire utilisés pour les différentes réceptions de données dans le cadre de l'application.

Une étape 270 du procédé 100 de transfert de données comprend l'envoi par une quelconque carte réseau 122, 123 de l'entité réceptrice 120 à une quelconque carte réseau 112, 113 de l'entité émettrice 110, d'une requête informant que l'entité réceptrice 120 est prête à recevoir le reste des données à transférer.

Une étape 280 du procédé 100 de transfert de données comprend une réception et un traitement, par une quelconque carte réseau 112, 113 de l'entité émettrice 110, de la requête.

Une étape 290 du procédé 100 de transfert de données comprend l'envoi, par les cartes réseau 112, 113 de l'entité émettrice 110, du reste des données à transférer. L'envoi est effectué en différents messages comprenant différents paquets restants de données. L'envoi, du reste des données à transférer est parallélisé en utilisant les plusieurs cartes réseaux 112, 113 de l'entité émettrice 110. Ainsi, la bande passante effective du transfert est multipliée puisque les performances de l'envoi du reste des données est accéléré. De plus, les paquets restants de données sont envoyées à différentes cartes réseaux 122, 123 de l'entité réceptrice 120. Dit autrement, les paquets de données sont réparties sur différentes cartes réseaux 122, 123 de l'entité réceptrice 120. Ainsi, dans le procédé 100, les données à transférer sont fragmentées. Dans un exemple, le nombre de différents messages est égal au nombre de cartes réseaux de l'entité réceptrice 120. Ainsi, chaque carte réseau de l'entité réceptrice reçoit un message comprenant un paquet de données. Cela est permis notamment par les informations de description comprises dans le premier message. En effet, les informations de description permettent notamment d'informer l'entité réceptrice 120 de la taille totale des données à transférer. Ainsi, à la réception du premier message, l'entité réceptrice 120 est mise au courant du fait qu'il reste des données à transférer et peut donc s'organiser afin d'optimiser la réception des données restantes à transférer, notamment en déléguant le travail à plusieurs cartes réseaux.

Une étape 300 du procédé 100 de transfert de données comprend une réception et traitement des différents messages par les cartes réseaux 122, 123 de l'entité réceptrice 120. Le traitement de chaque message reçu comprend notamment la mise en mémoire du paquet de données contenu dans le message. De plus, pour au moins un message reçu, le traitement du message peut comprendre le réordonnancement des données reçues afin qu'elles puissent être exploitées par l'entité réceptrice. Le traitement des messages restants peut aussi comprendre toute opération nécessaire pour déclarer que la réception de différents messages sur plusieurs cartes réseau est effectué dans le cadre d'un transfert global de données, i.e. dans le cadre du procédé 100 de transfert de données. En effet, par défaut, l'entité réceptrice pourrait considérer que chaque paquet de données reçu est indépendant.

Une étape 310 du procédé 100 de transfert de données comprend la notification, par au moins une des cartes réseaux 122, 123 de l'entité réceptrice 120 au CPU 121 de l'entité émettrice 120 et au CPU 111 de l'entité émettrice 110, de la réception des données à transférer. Ainsi, le CPU 111 de l'entité émettrice est mis au courant que le transfert de l'ensemble des données à transférer est terminé et le CPU 121 de l'entité réceptrice est mis au courant que l'ensemble des données à transférer a été reçu.

## Revendications

1. Procédé (200) de transfert de données, mis en œuvre par un réseau d'interconnexion (100) comprenant :
- une entité émettrice (110) comprenant un CPU (111) et un ensemble de cartes réseau (112, 113), et
- une entité réceptrice (120) comprenant un CPU (121) et un ensemble de cartes réseaux (122, 123),
les données à transférer ayant une taille supérieure à une taille maximale prédéterminée, la taille maximale prédéterminée correspondant à une taille maximale de données pouvant être transférées par l'entité émettrice à l'entité réceptrice en un seul envoi, la taille maximale prédéterminée étant connue par l'entité émettrice (110) et l'entité réceptrice (120), le procédé de transfert comprenant :
- soumission (230), par un processus exécuté par le CPU (111) de l'entité émettrice (110) à une première carte réseau d'envoi (112) de l'entité émettrice (110), des données à transférer à un processus exécuté par le CPU (121) de l'entité réceptrice (120),
- génération (240), par la première carte réseau d'envoi (112) de l'entité émettrice (110), d'un premier message à envoyer, le premier message comprenant un premier paquet de données à transférer ayant une taille égale à la taille maximale prédéterminée et des informations de description comprenant une taille des données à transférer,
- envoi (250), par la première carte réseau d'envoi (112) de l'entité émettrice (110) à une première carte réseau de réception (122) de l'entité réceptrice (120), du premier message,
- réception et traitement (260) du premier message par la première carte réseau de réception (122) de l'entité réceptrice,
- envoi (270), par une des cartes réseau (122, 123) de l'entité réceptrice (120) à une des cartes réseau (112, 113) de l'entité émettrice (110), d'une requête informant que l'entité réceptrice (120) est prête à recevoir le reste des données à transférer,
- réception et traitement (280), par l'une des cartes réseau (112, 113) de l'entité émettrice (110), de la requête,
- envoi (290), par l'ensemble des cartes réseau (112, 113) de l'entité émettrice (110), du reste des données à transférer, l'envoi étant effectué en différents messages, comprenant différents paquets restants de données, envoyés à l'ensemble des cartes réseaux (122, 123) de l'entité réceptrice (120),
- réception et traitement (300) des différents messages par l'ensemble des cartes réseaux (122, 123) de l'entité réceptrice (120), et
- notification (310), par au moins une des cartes réseaux (122, 123) de l'entité réceptrice (120) au CPU (121) de l'entité émettrice (120) et au CPU (111) de l'entité émettrice (110), de la réception des données à transférer.

2. Procédé (200) de transfert de données selon la revendication 1 dans lequel la taille maximale prédéterminée est comprise entre 0,5 et 2 mégaoctets.

3. Procédé (200) de transfert de données selon l'une quelconque des revendications précédentes dans lequel les données à transférer sont des données de calcul et les entités réceptrice (110) et émettrice (120) sont comprises dans deux nœuds distincts d'un supercalculateur.

4. Procédé (200) de transfert de données selon l'une quelconque des revendications précédentes comprenant en outre, avant la soumission (230) des données à transférer :
- Envoi (220), par l'entité réceptrice à la carte réseau de l'entité émettrice, d'un appel indiquant, à la carte réseau de l'entité émettrice que l'entité réceptrice est en attente de recevoir les données à transférer.

5. Procédé (200) de transfert de données selon l'une quelconque des revendications précédentes comprenant en outre une étape initiale de :
- initialisation (210) du réseau d'interconnexion durant laquelle l'entité émettrice (110) obtient une information indiquant des cartes réseaux de l'entité réceptrice disponibles pour du transfert du message parmi l'ensemble des cartes réseaux (122, 123) de l'entité réceptrice (120).

6. Procédé (200) de transfert de données selon l'une quelconque des revendications précédentes dans lequel la description du message comprend en outre au moins une adresse mémoire de l'entité émettrice (110) à laquelle l'entité réceptrice (120) peut accéder aux données du message.

7. Réseau d'interconnexion (100) comprenant :
- une entité émettrice (110) comprenant un CPU (111) et un ensemble de cartes réseaux (112, 113), et
- une entité réceptrice (120) comprenant un CPU (121) et un ensemble de cartes réseaux (122, 123),
le réseau d'interconnexion étant configuré pour mettre en œuvre le procédé de transfert selon l'une quelconque des revendications précédentes

8. Réseau d'interconnexion (100) selon la revendication précédente dans lequel le réseau d'interconnexion est un réseau d'interconnexion d'un supercalculateur.
